# EUROPEAN PATENT APPLICATION

(11) **EP 2 056 310 A1**
(43) Date of publication of application: **06.05.2009**
(21) Application number: 08167753.6
(22) Date of filing: 28.10.2008
(51) Int. Cl.: H01G 9/00, B01D 67/00

(54) **Method for producing an electrode and device**

(30) Priority: 30.10.2007 CN 200710165490; 29.11.2007 US 947328
(71) Applicant: General Electric Company, Schenectady, NY 12345 (US)
(72) Inventor: Cai, Wei, Shanghai 201300 (CN); Cao, Lei, Jinan 250023 (CN); Xiong, Ribhua, Shanghai 200433 (CN); Lu, Su, Shanghai 200092 (CN); Wei, Chang, Niskayuna, NY 12309 (US); Du, Yu, Raleigh, NC 27606 (US)
(74) Representative: Szary, Anne Catherine

(57) **Abstract**

The method includes: coating a slurry based on a carbon material, a water-insoluble binder, and a water-soluble polymer on a surface of a current collector to form a template structure; then drying the template structure; and finally, contacting the template structure with an aqueous solution, and thereby removing the water-soluble polymer and forming one electrode having a plurality of pores.

## Description

The invention may include embodiments that relate to a method for producing a porous electrode. The invention may include embodiments that relate to a device including the electrode.

Capacitors may be used as energy storage devices. In a double layer capacitor, a pair of polarizing electrodes is placed opposite to each other via an insulating but ion passable spacer within an electrolyte solution. An electric charge may accumulate in a layer formed at an interface between each polarizing electrode and the electrolyte solution. In a capacitor charging process, ionic species in the electrolyte solution are driven by an external electric field toward the oppositely charged electrodes and absorbed on the surfaces of the oppositely charged electrode; therefore, energy is stored in the capacitor. These absorbed charges can then be released back into the electrolyte solution during a discharge process, when previously stored energy is also released through external circuit. During a charging mode of the operation, the concentration of the ionic species in the electrolyte solution reduces over time. During a discharging mode of operation, the ionic species desorb from the electrode surfaces. If the contacting fluid is changed after the charging mode but before the discharging mode, it is possible to absorb ionic species from one fluid and discharge those ion species into another fluid. When the capacitor is operated in this manner, it can be used for removing minerals from liquids, such as water desalination. The electrolyte solution for the charging mode may include salt water and may be referred to as a feed stream; and during the discharging mode, a concentrate output stream may be used to receive the charged ionic species.

One important feature of the capacitor is described as electrostatic capacitance, which means the ion absorption capability of a capacitor. The electrostatic capacitance of the capacitor may increase in response to an increase in the surface area of the electrodes.

When designing an energy storage capacitor, it is desirable to achieve the highest surface area and the shortest distance between the two electrodes. However, it is not always the same case when designing a capacitor device for mineral removal application. The higher the surface area is, the smaller the pores are, usually in a few nanometer sizes. These nano pores may not be the most desirable for ion migration as there are diffusion limitations for ionic species to travel through the nano pores. On the other hand, the distance between the electrodes needs to be large enough to allow fluid to flow under a reasonable pressure differential.

It may be desirable to have an electrode with properties and characteristics that differ from the properties and characteristics of those electrodes that are used in commercially available energy storage capacitors today. It is be desirable to have a method of making the electrode that differs from those methods currently available. And, it may be desirable to have a device that utilizes the electrode.

### BRIEF DESCRIPTION

In accordance with one embodiment, a method includes coating a surface of a current collector with a slurry to form a template structure. The slurry includes a carbon material, a water-insoluble binder, and a water-soluble polymer. The template structure is dried. The dry template structure is contacted to an aqueous solution. The contact removes the water-soluble polymer and forms an electrode having a plurality of pores.

### DRAWINGS

FIG. 1 is a perspective view of an exemplary supercapacitor desalination (SCD) cell during a charging mode according to an embodiment of the invention;
FIG. 2 is another perspective view of the exemplary supercapacitor desalination device cell in FIG. 1 during a discharging mode;
FIG. 3 illustrates process steps for forming a porous carbon electrode in accordance with an embodiment of the invention;
FIG. 4 is a schematic view of an exemplary supercapacitor desalination device according to one embodiment of the invention;
FIG. 5 is an exploded perspective view of an exemplary supercapacitor desalination device stack of the supercapacitor desalination device of FIG 4.

### DETAILED DESCRIPTION

The invention may include embodiments that relate to a method for producing a porous electrode. The invention may include embodiments that relate to a method for producing a device including the electrode.

Approximating language, as used herein throughout the specification and claims, may be applied to modify any quantitative representation that could permissibly vary without resulting in a change in the basic function to which it is related. Accordingly, a value modified by a term or terms, such as "about", is not to be limited to the precise value specified. In some instances, the approximating language may correspond to the precision of an instrument for measuring the value.

Supercapacitor is an electrochemical capacitor that has a relatively higher energy density when compared to a common capacitor. As used herein, supercapacitor is inclusive of other high performance capacitors, such as ultracapacitors. A capacitor is an electrical device that can store energy in the electric field between a pair of closely spaced conductors (such as an electrode). When voltage is applied to the capacitor, electric charges of equal magnitude, but opposite polarity, build up on each electrode.

A supercapacitor desalination (SCD) cell refers to a supercapacitor that is employed for desalination of seawater or de-ionization of other brackish waters to reduce the amount of salt to a permissible level for domestic and industrial use. Such supercapacitor desalination device cells may remove or reduce other charged or ionic impurities from a liquid, such as wastewater or effluents from agricultural, industrial or municipal processes.

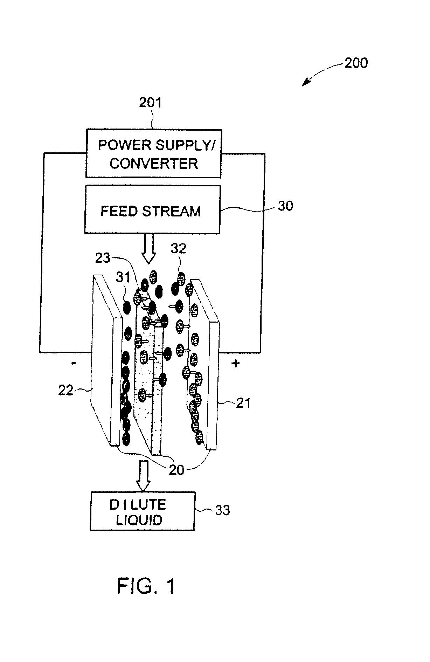

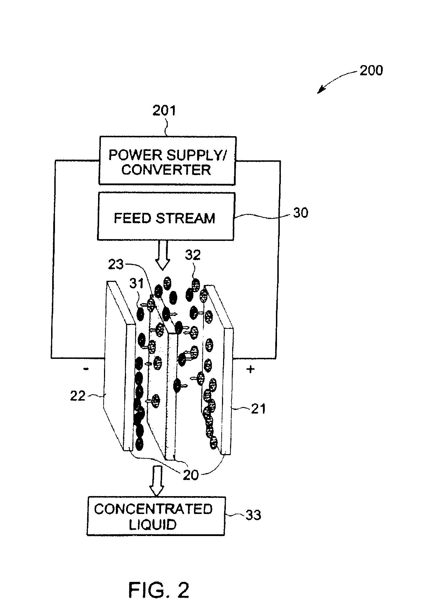

Referring to FIGS. 1 and 2, an exemplary supercapacitor desalination device system 200, respectively during charging and discharging modes, is illustrated. The supercapacitor desalination device system 200 employs the supercapacitor desalination device cell 20, which is electrically coupled to a power supply 201. The power supply 201 may also act as an energy recovery converter or may be in operative association with an energy converter. The supercapacitor desalination device cell 20 includes a first and second electrodes 21, 22. In the illustrated embodiment, the first electrode 21 is coupled to a positive terminal of the power supply 201 and acts as a positive electrode. The second electrode 22 is coupled to a negative terminal of the power supply 201 and acts as a negative electrode. An insulating but ion passable spacer 23 is disposed between the first and second electrodes 21, 22. A feed liquid 30 having charged species is made to pass the supercapacitor desalination device cell 20 and between the first and second electrodes 21, 22. An output stream 33 comes out of the supercapacitor desalination device cell 20.

During a charging mode, as illustrated in FIG. 1, the first and second electrodes 21 and 22 are configured to adsorb ions from the liquid that is to be de-ionized. When the feed liquid 30 having charged species passes through between the electrodes 21 and 22, the charged species or ions from the feed liquid 30 accumulate at the oppositely charged electrodes 21, 22. Cations 31 move towards the negative electrode (second electrode) 22, and anions 32 move towards the positive electrode (first electrode) 21. As a result of this charge accumulation inside the supercapacitor desalination device cell 20, the output stream 33, which is a dilute liquid coming out of the supercapacitor desalination device cell 20, has a lower concentration of charged species as compared to the feed liquid 30. In one embodiment, the dilute liquid 33 may be again subjected to de-ionization by being fed through another supercapacitor desalination device cell 20.

During a discharging mode after the charging mode, as illustrated in FIG. 2, the absorbed ions dissociate from the surface of the first and second electrodes 21, 22. In one embodiment, during the discharging mode of the supercapacitor desalination device cell 20, the polarities of the first and second electrodes 21 and 22 may be maintained the same, but the potential difference between the first and the second electrodes 21, 22 become less, thus the anions and cations 32, 31 desorb from the first and second electrodes 21, 22. While in other embodiments, during the discharging mode of the supercapacitor desalination device cell 20, the polarities of the first and second electrodes 21 and 22 are reversed, and thus the cations 31 accumulated on the second electrode 22 moves toward the first electrode 21, and the anions 32 move from the first electrode 21 to the second electrode 22. As a result the output stream 33, which is called concentrate stream, has a higher concentration of charged species compared to the feed liquid 30 and the dilute stream coming out at the charging mode. Meanwhile, the energy released from the supercapacitor desalination device cell 20 can be reused or recovered through an energy recovery device, for example, a bidirectional DC-DC converter.

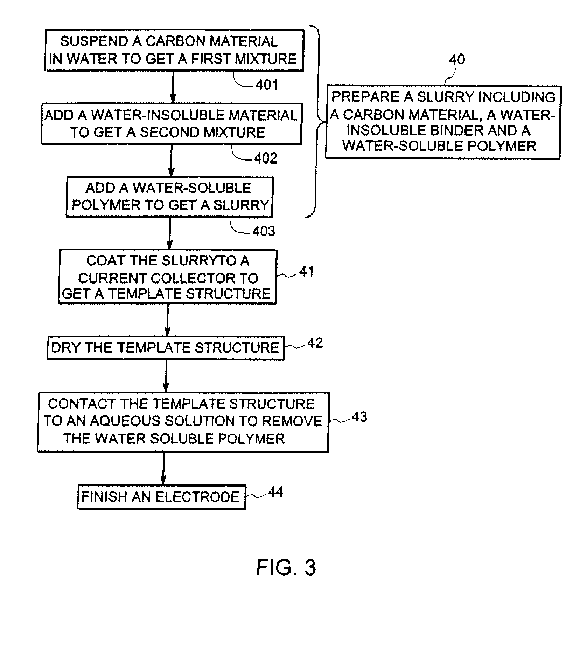

Reference is now made to FIG. 3, in which a method process for forming a porous electrode, such as the first and second electrodes 21, 22, is illustrated. The method generally includes the steps: coat a slurry that includes a carbon material, a water-insoluble binder, and a water-soluble polymer on a surface of a current collector to form a template structure; then dry the template structure; and finally contact the template structure to an aqueous solution to remove the water-soluble polymer and form a plurality of pores.

At block 40, a slurry is prepared from at least a carbon material, a water-insoluble binder, and a water-soluble polymer. The method includes suspending and agitating a carbon material powder in water or an aqueous solution, so as to get a first mixture at block 401. A suitable carbon material may include one or more of activated carbon, carbon black, carbon nanotubes, graphite, carbon fiber, carbon cloth, or carbon aerogel. Particles of the carbon material in the slurry may have an average diameter in a range of from about 1 micrometer to about 100 micrometers. Selection of the material type, coating or sizing treatments, amounts and diameters may be determined by required electrical conductivity, mechanical stability, economic factors, and other process-specific variables.

At block 402, a water-insoluble binder with a stir is added into the first mixture, followed by agitating, so as to get a second mixture. In one embodiment, the water-insoluble binder is a fluoride polymer, such as, polytetrafluoroethylene (PTFE) or polyvinyldifluoroethylene (PVDF) and the like. The added water-insoluble binder is dropped into the first mixture in a form of aqueous emulsion and has a concentration in water from 0.1 percent to 60 percent by weight. Particle size of the water-insoluble binder is from about 100 nanometers to 800 nanometers. Selection of the material type, amounts and diameters may be determined by required solvent selection, mechanical stability, economic factors, and other process-specific variables.

At block 403, a water-soluble polymer is added into the second mixture and agitated to obtain the slurry. In one embodiment, the water-soluble polymer is selected from one of polyvinylpyrrolidone, poly (ethylene) oxide, poly (ethylene) glycol, polyvinyl alcohol, carboxymethyl cellulose (CMC), or polyacrylamine (PAM) and the like.. The selected water-soluble polymer has a molecular weight in a range from about 500 Dalton to about 1000,000 Dalton. Selection of the material type, amounts and diameters may be determined by required pore size, mechanical stability, economic factors, and other process-specific variables.

In the slurry, a weight ratio of the water-insoluble binder and the carbon material is about 4:100 to about 10:100. A suitable weight ratio of the water-soluble polymer and the carbon material is about 1:20 to about 1:1.

After the slurry is prepared, at block 41, the slurry is coated on a current collector to form a template structure. Alternatively, the slurry can be dried to remove the water content and then re-dispersed in an alcohol solution, such as ethanol or isopropanol, to form the slurry. In one embodiment, the slurry is coated on the current collector, for example but not limited to, by casting, screen printing, rolling or the like. In one embodiment, the current collector is configured as a plate, a mesh, a foil, or a sheet and formed from a metal or metal alloy. Suitable metals may include titanium, platinum, iridium, or rhodium. Suitable metal alloys may include stainless steel. In another embodiment, the current collector is formed from graphite. In one embodiment, the current collector is formed from a plastic material. Suitable plastic materials may include, for example, polyolefins. Suitable polyolefins may include polyethylene. The plastic current collector may be mixed with conductive carbon black or metallic particles.

The template structure is dried (step 42). Drying may be performed at an elevated temperature. After drying, the template structure is exposed to air in a local environment having a controlled temperature and humidity. The template structure may be pressed by a press machine or may be rolled by a rolling machine to form a layer of defined thickness.

The dried template structure is contacted to an aqueous solution (step 43). The contact dissolves and removes the water-soluble polymer from the template structure. In one embodiment, the dried template structured is immersed into water or an aqueous-alcohol solution, and thus the water-soluble polymer is dissolved in the water or the aqueous-alcohol solution. Agitating the aqueous solution may aid in removal of the water-soluble polymer. Alternatively, the water-soluble polymer may be removed from the template structure after the template structure is assembled into the supercapacitor desalination device cell 20 or into the supercapacitor desalination device stack 2. The space formerly occupied by the water-soluble polymer defines a plurality of pores. The pores extend through the electrode and between the carbon material particles.

Through this process, the finished electrode is formed and has a relatively high surface area. The finished electrode may be suitable for use as either of the first and the second electrodes 21, 22. The pores formed may be uniformly distributed. The pores may have an average diameter that is greater than about 100 nanometers. In one embodiment, the pores may have an average diameter that is in a range of from about 100 nanometers to about 500 nanometers, or from about 500 nanometers to about 1 micrometer. The surface area of the exposed carbon material may be greater than about 500 m²/g as measured by nitrogen adsorption BET method. In one embodiment, the surface area may be in a range of from about 500 m²/g to about 1000 m²/g, from about 1000 m²/g to about 1500 m²/g, or from about 1500 m²/g to about 2000 m²/g.

Although in the illustrated embodiment, the electrodes 21 and 22 are in the form of plates that are disposed parallel to each other to form a stacked structure, in other embodiments, the first and second electrodes may have other shapes. Other suitable shapes and configurations may include a sheet, a block, or a cylinder. The sheet may be rugate to further increase surface area per volume. Also, these electrodes may be arranged in differing configurations. For example, the first and second electrodes may be disposed concentrically with a continuous space therebetween to define a spiral.

In one embodiment, the insulating spacers 23 are made from electrically insulating polymers. Suitable electrically insulating polymers may include one or more of polyolefin, poly vinyl chloride, or nylon. Suitable polyolefins may include polyethylene or polypropylene. The electrically insulating polymers may include halogenated derivatives of the foregoing, such as polytetrafluoroethylene.

The insulating spacer 23 may be a membrane, a mesh, a mat, a sheet, a film, or a weave. A thickness of the insulating spacer 23 may be less than about 1 centimeter. In one embodiment, the thickness may be in a range of from about 10⁻⁶ centimeters to about 0.1 centimeters, from about 0.1 centimeters to about 0.5 centimeters, or from about 0.5 centimeters to about 1 centimeter.

The insulating spacer 23 is disposed in the middle of the first and the second electrodes 21, 22 at an average distance in a range of from about 0 millimeter to about 1 millimeter. In other embodiments, distance from the insulating spacer 23 to the first electrode 21 differs from the distance from the insulating spacer 23 to the second electrode 22. Opposite surfaces of the insulating spacer 23 may be respectively coextensive with a corresponding surface of the first and second electrodes 21, 22.

Ion exchange media (not shown) may be placed adjacent and proximate to one or both of the positive first electrode and the negative second electrode 21, 22. For example, an anion exchange media may be placed near the positive electrode 21, and a cation exchange media is placed near the negative electrode 22. Anions may selectively pass the anion exchange media, and cations may selectively pass the cation exchange media. This arrangement may increase the salt removal efficiency.

Such anion and cation exchange media can be freestanding respectively adjacent to the positive and negative electrodes, or respectively coated on the surfaces of the positive and negative electrodes, or respectively partially penetrate into the positive and negative electrodes. The cation exchange media could be ionic polymer or cross-linked ionic polymers that contain negatively charges, such as sulfonic acid groups.

The anion exchange media could be ionic polymer or cross-linked ionic polymers that contain positively charges, such as quaternary amine groups.

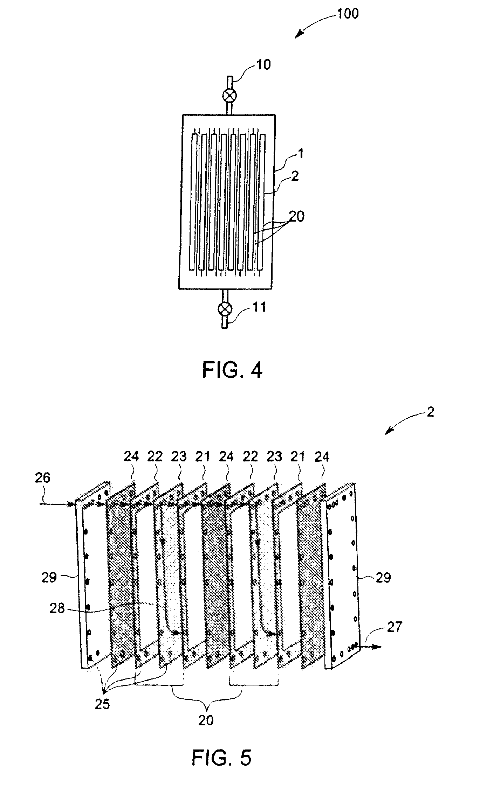

A supercapacitor desalination device 100 is illustrated in Fig. 4. The supercapacitor desalination device 100 includes the supercapacitor desalination device stack 2 housed in a vessel 1. The vessel 1 includes an inlet 10 from where the feed liquid 30 enters the vessel 1, and an outlet 11 from where the dilute liquid 33 exits the vessel 1 after being at least partially de-ionized by the supercapacitor desalination device stack 2. The feed liquid 30 may be guided inside the vessel 1 by using external forces. Pumping may create suitable external forces.

Referring to FIG. 5, the supercapacitor desalination device stack 2 employs a number of supercapacitor desalination device cells 20. Each supercapacitor desalination device cell 20 includes first and second electrodes, and an insulating spacer 23 between the first and the second electrodes. An insulating film 24 may be respectively disposed between every pair of adjacent supercapacitor desalination device cells 20. Every pair of supercapacitor desalination device cells 20 is electrically insulating from each other pair.

The stack 2 further includes a plurality of support plates 29. The support plates provide mechanical stability to the structure. In the illustrated embodiment, the support plates 29, the first and second electrodes, the spacer 23, and the insulating film 24 include holes 25 to direct the flow of the feed liquid 30 and to define a hydraulic flow path between the supercapacitor desalination device cells 20. As illustrated, the liquid is directed inside the supercapacitor desalination device cells 20 from the direction indicated by the arrow 26. After entering the supercapacitor desalination device cell, the liquid is directed such that it flows through the surface of the first and second electrodes as indicated by the hydraulic flow path 28. The liquid may traverse through the maximum portion of the surface of the first and second electrodes. Subsequently, the liquid exits the supercapacitor desalination device cell 20 as indicated by the arrow 27. In one embodiment, the feed liquid may be passed through the stack 2 more than once.

The embodiments described herein are examples of compositions, structures, systems and methods having elements corresponding to the elements of the invention recited in the claims. This written description may enable those of ordinary skill in the art to make and use embodiments having alternative elements that likewise correspond to the elements of the invention recited in the claims. The scope of the invention thus includes compositions, structures, systems and methods that do not differ from the literal language of the claims, and further includes other structures, systems and methods with insubstantial differences from the literal language of the claims. While only certain features and embodiments have been illustrated and described herein, many modifications and changes may occur to one of ordinary skill in the relevant art. The appended claims cover all such modifications and changes.

For completeness, various aspects of the invention are now set out in the following numbered clauses:
1. A method, comprising:
   coating a slurry on a surface of a current collector to form a template structure, wherein the slurry comprises a carbon material, a water-insoluble binder, and a water-soluble polymer;
   drying the template structure; and
   contacting the template structure to an aqueous solution, and thereby to remove the water-soluble polymer and to form an electrode having a plurality of pores.
2. The method according to clause 1, further comprising preparing the slurry by:
   suspending and agitating the carbon material in the form of a powder in water to form a first mixture;
   agitating the water-insoluble binder into the first mixture to form a second mixture; and
   agitating the water-soluble polymer into the second mixture to form the slurry.
3. The method according to clause 1, further comprising selecting the carbon material from at least one of activated carbon, carbon black, carbon nanotubes, graphite, carbon fiber, carbon cloth, or carbon aerogel.
4. The method according to clause 1, wherein the slurry comprises particles of carbon material that have an average diameter in a range of from about 1 micrometer to about 100 micrometers.
5. The method according to clause 1, further comprising selecting the water-soluble polymer to have a molecular weight in a range of from about 500 Daltons to about 1000,000 Daltons.
6. The method according to clause 1, further comprising selecting the water-insoluble binder in a form of aqueous emulsion, the water-insoluble binder having a concentration in the aqueous emulsion from about 0.1 percent to about 60 percent by weight.
7. The method according to clause 1, further comprising selecting the water-insoluble binder to be a fluoride polymer.
8. The method according to clause 1, further comprising selecting the water-insoluble binder to have a particle size of about 100 nanometers to about 800 nanometers.
9. The method according to clause 1, further comprising selecting the water-soluble polymers to be at least one of polyvinylpyrrolidone, poly(ethylene) oxide, poly(ethylene) glycol, polyvinyl alcohol, carboxymethyl cellulose, or polyacrylamine.
10. The method according to clause 1, wherein the a weight ratio of the water-insoluble binder and the carbon material is in a range of from about 4:100 to about 10:100, and wherein a weight ratio of the water-soluble polymer and the carbon material is in a range of from about about 1:20 to about 1:1.
11. The method according to clause 1, wherein coating the slurry comprises coating the slurry on the current collector by casting, screen printing, or rolling.
12. The method according to clause 1, further comprising forming the current collector from graphite, or from an electrically conductive plastic, or from a metal or metal alloy seleted from the group consisting of stainless steel, titanium, platinum, iridium, and rhodium.
13. The method according to clause 1, wherein drying the template structure comprises exposing the template structure to air in a local environment with and controlling the temperature and the humidity in the local environment.
14. The method according to clause 1, wherein contacting the template structure to an aqueous solution comprises immersing the template in water or in an aqueous-alcohol solution.
15. The method according to clause 1, wherein contacting the template structure to an aqueous solution comprises agitating the aquesous solution to aid in removal of the water soluble polymer.
16. The method according to clause 1, wherein contacting the template structure to an aqueous solution removes the water soluble polymer to define the plurality of pores in the porous electrode so formed, and in which the pores have an average diameter that is in a range of from about 100 nanometers to about 1 micrometer.
17. The method according to clause 1, wherein the pores have a uniformity of distribution.
18. The method according to clause 1, wherein the carbon material of the formed porous electrode has a surface area that is in a range of from about 500 to 2000 squaremeters per gram as measured by nitrogen adsorption BET method.
19. The method according to clause 1, further comprising forming at least one capacitor desalination cell, comprising:
   preparing sufficient template structures to form a first porous electrode and a second porous electrode; and
   arranging an electrically insulating and ion-passable spacer between the first porous electrode and the second porous electrode.
20. The method according to clause 19, further comprising spacing the seperator from a surface of the first porous electrode and a surface of the second porous electrode respectively an average distance that is less than about 1 millimeter.
21. The method according to clause 19, wherein the spacer comprises one or more electrically insulating polymers selected from the group consisting of polyethylene, polyvinyl chloride, polypropylene, and nylon, or from halogenated derivatives thereof.
22. The method according to clause 19, wherein the spacer has a thickness in a range from about 10⁻⁶ centimeters to about 1 centimeter
23. The method according to clause 19, wherein a distance between the spacer and one porous electrode is different from a distance between the space and the other porous electrode.
24. The method according to clause 19, wherein opposite surfaces of the spacer are each coextensive with a surface of a corresponding porous electrode.
25. The method according to clause 19, wherein ion exchange medias are placed close to the first and second porous electrodes.

## Claims

1. A method, comprising:
coating a slurry on a surface of a current collector to form a template structure, wherein the slurry comprises a carbon material, a water-insoluble binder, and a water-soluble polymer;
drying the template structure; and
contacting the template structure to an aqueous solution, and thereby to remove the water-soluble polymer and to form an electrode having a plurality of pores.

2. The method according to claim 1, further comprising preparing the slurry by:
suspending and agitating the carbon material in the form of a powder in water to form a first mixture;
agitating the water-insoluble binder into the first mixture to form a second mixture; and
agitating the water-soluble polymer into the second mixture to form the slurry.

3. The method according to claim 1 or claim 2, further comprising selecting the carbon material from at least one of activated carbon, carbon black, carbon nanotubes, graphite, carbon fiber, carbon cloth, or carbon aerogel.

4. The method according to any preceding claim, wherein the slurry comprises particles of carbon material that have an average diameter in a range of from about 1 micrometer to about 100 micrometers.

5. The method according to any preceding claim, further comprising selecting the water-insoluble binder in a form of aqueous emulsion, the water-insoluble binder having a concentration in the aqueous emulsion from about 0.1 percent to about 60 percent by weight.

6. The method according to any preceding claim, further comprising selecting the water-insoluble binder to be a fluoride polymer.

7. The method according to any preceding claim, further comprising selecting the water-insoluble binder to have a particle size of about 100 nanometers to about 800 nanometers.

8. The method according to any preceding claim, further comprising selecting the water-soluble polymers to be at least one of polyvinylpyrrolidone, poly(ethylene) oxide, poly(ethylene) glycol, polyvinyl alcohol, carboxymethyl cellulose, or polyacrylamine.

9. The method according to any preceding claim, wherein the a weight ratio of the water-insoluble binder and the carbon material is in a range of from about 4:100 to about 10:100, and wherein a weight ratio of the water-soluble polymer and the carbon material is in a range of from about about 1:20 to about 1:1.

10. The method according to any preceding claim, wherein coating the slurry comprises coating the slurry on the current collector by casting, screen printing, or rolling.

11. The method according to any preceding claim, further comprising forming the current collector from graphite, or from an electrically conductive plastic, or from a metal or metal alloy seleted from the group consisting of stainless steel, titanium, platinum, iridium, and rhodium.

12. The method according to any preceding claim, wherein drying the template structure comprises exposing the template structure to air in a local environment with and controlling the temperature and the humidity in the local environment.

13. The method according to any preceding claim, wherein contacting the template structure to an aqueous solution comprises immersing the template in water or in an aqueous-alcohol solution.

14. The method according to any preceding claim, wherein the pores have a uniformity of distribution.

15. The method according to any preceding claim, further comprising forming at least one capacitor desalination cell, comprising:
preparing sufficient template structures to form a first porous electrode and a second porous electrode; and
arranging an electrically insulating and ion-passable spacer between the first porous electrode and the second porous electrode.
